# EUROPEAN PATENT APPLICATION

(11) **EP 4 600 565 A1**
(43) Date of publication of application: **13.08.2025**
(21) Application number: 24200679.9
(22) Date of filing: 17.09.2024
(51) Int. Cl.: F24F 1/0083, B01D 53/26, F24F 1/0358, F24F 3/14

(54) **DEHUMIDIFIER**

(30) Priority: 07.02.2024 KR 20240018775
(71) Applicant: LG Electronics Inc., Yeongdeungpo-gu Seoul 07336 (KR)
(72) Inventor: PARK, Janghee, 08592 Seoul (KR); JEONG, Yongki, 08592 Seoul (KR); KIM, Kyungrock, 08592 Seoul (KR); LEE, Jinwoo, 08592 Seoul (KR); PARK, Taeju, 08592 Seoul (KR)
(74) Representative: Vossius & Partner Patentanwälte Rechtsanwälte mbB

(57) **Abstract**

The present disclosure relates to a dehumidifier.

A dehumidifier according to an embodiment of the present disclosure may include a main body including a suction part and a fan; a dehumidification module including a dehumidification member made of polymer membrane fibers to separate moisture from the humid air suctioned from the suction part; a vacuum pump configured to provide driving force to discharge moisture separated from the dehumidification module to an outside of the dehumidification module; a heat exchanger fluidly connected to the vacuum pump and configured to condense the separated moisture; and a drain tank configured to store water condensed in the heat exchanger, in which a first direction of humid air flowing into the dehumidification module and a second direction in which moisture separated within the dehumidification module flows may be perpendicular to each other.

## Description

### BACKGROUND

The present disclosure relates to a dehumidifier.

A dehumidifier is a type of home appliance that lowers the humidity in a desired space by suctioning in air from a desired space, removing moisture contained in the air, and discharging the dehumidified air to a desired space.

A conventional dehumidifier removes moisture by suctioning air from a desired space and passing the air through a heat exchanger consisting of a condenser and an evaporator, thereby exchanging heat between the refrigerant flowing through the condenser and the evaporator and the air passing through them.

The evaporator absorbs heat from the surrounding air by evaporating the liquid refrigerant, and the condenser releases heat by condensing the gaseous refrigerant and transfers the heat to the surrounding air. In other words, the air passing through the heat exchanger exchanges heat with the refrigerant while passing through the evaporator, thereby lowering the humidity, and the air with the lowered humidity passes through the condenser, exchanges heat with the refrigerant, and the drying process proceeds.

The dried air passing through the heat exchanger is discharged to a desired space, thereby lowering the humidity in the air in the desired space.

According to this conventional dehumidifier, there was a problem that the temperature of the discharged air increased, causing discomfort to the user.

### SUMMARY

An object of the present disclosure is to provide a dehumidifier that may implement constant temperature dehumidification without increasing the temperature of an indoor space by selectively separating moisture in the air through a dehumidification module including a membrane without operating a refrigeration cycle.

An object of the present disclosure is to provide a dehumidifier that may shorten the dehumidification time because dehumidification may be accomplished by passing through a dehumidification module without requiring time for stabilization of the refrigeration cycle.

An object of the present disclosure is to provide a dehumidifier that may easily separate and condense moisture by generating a first suction flow of air to remove moisture and a second suction flow of air to perform heat exchange.

An object of the present disclosure is to provide a dehumidifier equipped with a two-way suction fan so that the first suction flow and the second suction flow may be suctioned into the dehumidifier in directions facing each other.

An object of the present disclosure is to provide a dehumidifier in which moisture separation performance may be improved by being configured so that the first direction of the suction flow of air to remove moisture and the second direction of flow of separated water vapor are perpendicular to each other.

An object of the present disclosure is to provide a dehumidifier that may move water vapor in the air passing through the dehumidification module to the inside of the membrane by generating a pressure difference between the inside and outside of the membrane using a vacuum pump.

An object of the present disclosure is to provide a dehumidifier that facilitates the removal of condensed moisture by allowing water vapor separated from a dehumidification module to flow into a heat exchanger via a vacuum pump and exchange heat with indoor air in the heat exchanger.

An object of the present disclosure is to provide a dehumidifier in which the first part where the fan that generates air flow is disposed is disposed in the upper space of the dehumidifier, so that air may be easily suctioned into the indoor space.

An object of the present disclosure is to provide a dehumidifier in which a dehumidification module that separates moisture from the air is disposed in the first part, and the separated water vapor falls in the direction of gravity, making it easy to collect water vapor and forming a compact piping connected to a vacuum pump.

An object of the present disclosure is to provide a dehumidifier in which the main flow of indoor air requiring dehumidification and the sub-flow for the heat exchanger may easily occur in two directions using one fan by placing the heat exchanger in the first part.

An object of the present disclosure is to provide a dehumidifier that may facilitate the generation of a main flow in which a relatively large amount of suction is performed and a sub-flow in which a small amount of suction is performed and may prevent pressure loss by dividing the first part through a partition wall and disposing a dehumidification module and a heat exchanger in the divided area.

An object of the present disclosure is to provide a dehumidifier that may easily suction the separated water vapor into the vacuum pump by the gravitational effect by disposing a vacuum pump for suctioning water vapor separated from a dehumidification module in the second part and forming the second part as the lower space of the dehumidifier.

An object of the present disclosure is to provide a dehumidifier that quickly transfers high-temperature water vapor passing through the vacuum pump to the heat exchanger, is easy to block noise generated by the vacuum pump and is also effective for maintenance accessibility by disposing the vacuum pump in the second part below the heat exchanger.

An object of the present disclosure is to provide a dehumidifier that facilitates the flow of condensed water in the direction of gravity by disposing a drain tank for storing water condensed in a heat exchanger in the second part.

An object of the present disclosure is to provide a dehumidifier in which the upper space of the dehumidifier may be efficiently utilized and the user's accessibility to the water supply tank is improved by disposing the water supply tank that supplies water to the dehumidification module in the second part.

An object of the present disclosure is to provide a dehumidifier that may improve the moisture separation performance of a dehumidification module.

An object of the present disclosure is to provide a dehumidifier capable of increasing the flow rate of air flowing into a dehumidification module.

An object of the present disclosure is to provide a dehumidifier in which air flowing into a dehumidification module may have a uniform flow.

An object of the present disclosure is to provide a dehumidifier that may improve the contact surface area between a dehumidification member and air.

A dehumidifier according to an embodiment of the present disclosure may include a main body including a suction part and a fan; a dehumidification module including a dehumidification member made of polymer membrane fibers to separate moisture from the humid air suctioned from the suction part; a vacuum pump configured to provide driving force to discharge moisture separated from the dehumidification module to an outside of the dehumidification module; a heat exchanger fluidly connected to the vacuum pump and configured to condense the separated moisture; and a drain tank configured to store water condensed in the heat exchanger.

A first direction of humid air flowing into the dehumidification module and a second direction in which moisture separated within the dehumidification module flows may be perpendicular to each other.

A plurality of dehumidification members may be provided, and a third direction in which the plurality of dehumidification members is arranged may be perpendicular to the first direction and the second direction, respectively.

The dehumidifier may further include a suction grill coupled to the suction part and in which a plurality of air holes is formed.

The suction grill, the dehumidification module, and the fan may be disposed to face each other.

An imaginary line passing through a center of the suction grill may pass through a center of the dehumidification module and a center of the fan.

In the plurality of air holes, the size of the air hole may increase as the distance from the center of the suction grill increases.

The dehumidification module may include a housing disposed to surround at least a portion of the dehumidification member.

The suction grill may be formed to be larger than an area of the dehumidification member exposed by the housing.

The plurality of air holes may be formed in a shape corresponding to a shape of the suction grill.

The suction grill may be formed in a shape of a square plate whose length in a vertical direction is longer than that in left and right directions.

The plurality of air holes may be formed to be longer in the vertical direction than in the left and right directions.

The suction grill may include a plurality of circular grills having the same center and different diameters.

The plurality of air holes may be formed between the plurality of circular grills.

The plurality of air holes may be formed in a trapezoidal shape by ribs connecting the plurality of circular grilles.

The suction part may include a first suction part formed on a first surface of the main body and to which the suction grill is coupled; and a second suction part formed on a second surface of the main body.

The fan includes a two-way suction fan that discharges air suctioned from the first suction part and the second suction part, respectively.

The first suction part and the second suction part may be disposed across from each other based on the main body. The dehumidification module may be disposed between the first suction part and the fan.

The heat exchanger may be disposed between the second suction part and the fan.

A dehumidifier according to an embodiment of the present disclosure may include a main body including a suction part and a fan; a dehumidification module including a dehumidification member that separates moisture from the air suctioned from the suction part by driving the fan; a vacuum pump configured to provide drive force to discharge moisture separated from the dehumidification module to an outside of the dehumidification module; a heat exchanger fluidly connected to the vacuum pump and configured to condense the separated moisture; a drain tank configured to store water condensed in the heat exchanger; and a suction grill coupled to the suction part or the dehumidification module and in which a plurality of air holes is formed.

The suction grill, the dehumidification module, and the fan may be disposed to face each other.

In the plurality of air holes, the size of the air hole may increase as the distance from a center of the suction grill increases.

The dehumidification module may include a housing disposed to surround at least a portion of the dehumidification member, and the suction grill may be coupled to an outer surface of the housing.

The suction grill may be formed to be larger than an area of the dehumidification member exposed by the housing.

### BRIEF DESCRIPTION OF THE DRAWINGS

FIG. 1 is a perspective view illustrating the outer appearance of a dehumidifier according to an embodiment of the present disclosure.
FIG. 2 is a rear perspective view illustrating the configuration of a dehumidifier according to an embodiment of the present disclosure.
FIG. 3 is a front perspective view illustrating the configuration of a dehumidifier according to an embodiment of the present disclosure.
FIG. 4 is a left side perspective view illustrating the configuration of a dehumidifier according to an embodiment of the present disclosure.
FIG. 5 is a right side perspective view illustrating the configuration of a dehumidifier according to an embodiment of the present disclosure.
FIG. 6 is an exploded perspective view illustrating a dehumidifier according to an embodiment of the present disclosure.
FIG. 7 is a cross-sectional view taken along line 7-7 in FIG. 1.
FIG. 8 is a top perspective view illustrating the configuration of a dehumidification module according to an embodiment of the present disclosure.
FIG. 9 is a lower perspective view illustrating the configuration of a dehumidification module according to an embodiment of the present disclosure.
FIG. 10 is an exploded perspective view illustrating a dehumidification module according to an embodiment of the present disclosure.
FIG. 11 is a view illustrating the configuration of a dehumidification member according to an embodiment of the present disclosure.
FIG. 12 is a view illustrating a state where the first suction flow and discharge flow are generated in the dehumidifier according to an embodiment of the present disclosure.
FIG. 13 is a top perspective view illustrating the configuration of the first part and the second part in the dehumidifier according to an embodiment of the present disclosure.
FIG. 14 is a perspective view illustrating the internal configuration of a dehumidifier in a state where the dehumidification module according to an embodiment of the present disclosure is removed.
FIG. 15 is a lower perspective view illustrating the configuration of the first part and the second part in the dehumidifier according to an embodiment of the present disclosure.
FIG. 16 is a view illustrating a partial configuration of a dehumidifier according to an embodiment of the present disclosure.
FIG. 17 is a view illustrating a state where a portion of the discharge flow of the fan according to an embodiment of the present disclosure flows into the inlet guide.
FIG. 18 is a view illustrating a state where the first suction grill, the dehumidification module, and the fan are arranged in the front and rear direction according to an embodiment of the present disclosure.
FIG. 19 is a front view illustrating the first suction grill according to an embodiment of the present disclosure.
FIG. 20 is a view illustrating the areas where air holes are formed in the first suction grill according to an embodiment of the present disclosure.
FIG. 21 is a front view illustrating a first suction grill according to another embodiment of the present disclosure.
FIG. 22 is a perspective view illustrating a dehumidification module equipped with a dehumidification grill according to another embodiment of the present disclosure.
FIG. 23 is a front view illustrating the dehumidification grill of FIG. 22.

### DETAILED DESCRIPTION OF THE EMBODIMENTS

Reference will now be made in detail to the embodiments of the present disclosure, examples of which are illustrated in the accompanying drawings.

In the following detailed description of the preferred embodiments, reference is made to the accompanying drawings that form a part hereof, and in which is illustrated by way of illustration specific preferred embodiments in which the disclosure may be practiced. These embodiments are described in sufficient detail to enable those skilled in the art to practice the disclosure, and it is understood that other embodiments may be utilized and that logical structural, mechanical, electrical, and chemical changes may be made without departing from the scope of the disclosure. To avoid detail not necessary to enable those skilled in the art to practice the disclosure, the description may omit certain information known to those skilled in the art. The following detailed description is, therefore, not to be taken in a limiting sense.

Also, in the description of embodiments, terms such as first, second, A, B, (a), (b) or the like may be used herein when describing components of the present disclosure. Each of these terminologies is not used to define an essence, order or sequence of a corresponding component but used merely to distinguish the corresponding component from other component(s). It should be noted that if it is described in the specification that one component is "connected," "coupled" or "joined" to another component, the former may be directly "connected," "coupled," and "joined" to the latter or "connected", "coupled", and "joined" to the latter via another component.

In the specification or claims, the expression of "an element A includes or comprises at least one of a, b, and/or c" may mean (1) the element A includes or comprises "a", (2) the element A includes or comprises "b", (3) the element A includes or comprises "c", (4) the element A includes or comprises "a and b", (5) the element A includes or comprises "b and c", (6) the element A includes or comprises "a and c", and (7) the element A includes or comprises "a, b and c".

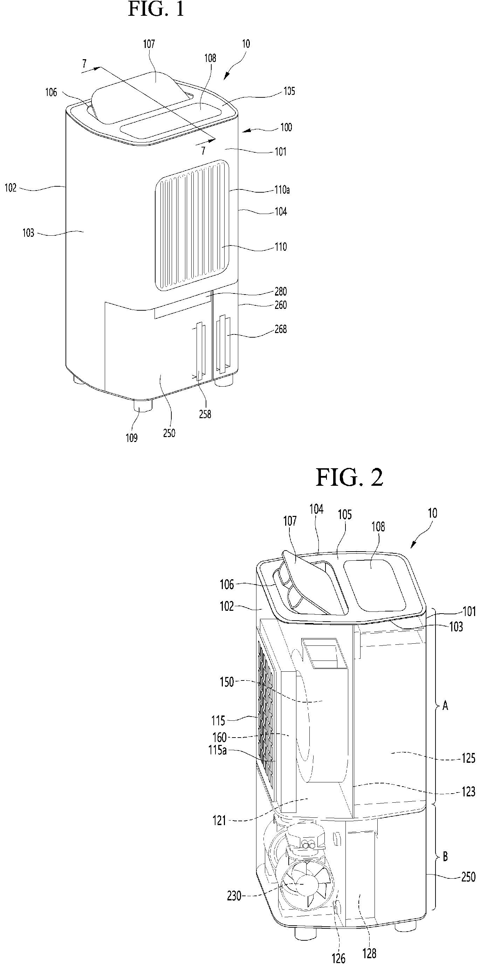

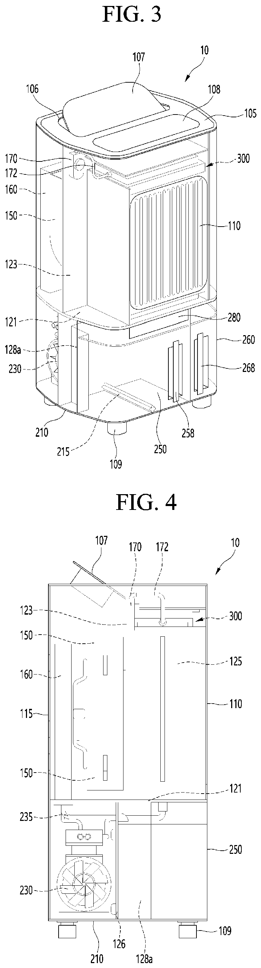

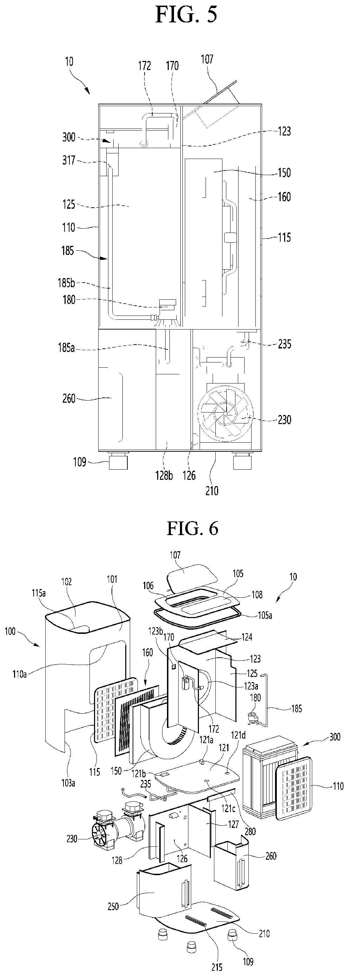

FIG. 1 is a perspective view illustrating the outer appearance of a dehumidifier according to an embodiment of the present disclosure, FIG. 2 is a rear perspective view illustrating the configuration of a dehumidifier according to an embodiment of the present disclosure, FIG. 3 is a front perspective view illustrating the configuration of a dehumidifier according to an embodiment of the present disclosure, FIG. 4 is a left side perspective view illustrating the configuration of a dehumidifier according to an embodiment of the present disclosure, and FIG. 5 is a right side perspective view illustrating the configuration of a dehumidifier according to an embodiment of the present disclosure.

Referring to FIGS. 1 to 5, the dehumidifier 10 according to an embodiment of the present disclosure may have a three-dimensional shape in which the height in the vertical direction is greater than the width in the front and rear direction.

Directions are defined. In FIG. 1, the surface on which the first suction part 110a is formed is defined as the front surface, the surface on which the second suction part 115a is formed in FIG. 2 is defined as the rear surface, and the surface on which the discharge part 106 is formed is defined as the upper surface.

The dehumidifier 10 may include a main body 100 that forms an outer appearance. The main body 100 may accommodate a number of components for suctioning air, removing moisture from the suctioned air, and discharging dehumidified air.

The main body 100 may include a front portion 101, a rear portion 102, a first side portion 103, a second side portion 104, an upper portion 105, and a lower portion. The lower portion may be defined by the base 210.

The front portion 101 may include a first suction part 110a that suctions air. A first suction grill 110 may be provided in the first suction part 1 10a. Air from an indoor space subject to dehumidification may be suctioned in through the first suction part 1 10a. The air flow suctioned from the first suction part 110a may be referred to as "first suction flow (first flow)" or "main flow."

The rear portion 102 may be disposed to face the front portion 101.

The rear portion 102 may include a second suction part 115a that suctions air. A second suction grill 115 may be provided in the second suction part 115a. Air from the indoor space to flow into the heat exchanger 160 may be suctioned in through the second suction part 115a. The air flow suctioned from the second suction part 115a may be referred to as "second suction flow (second flow)" or "sub flow."

The first side portion 103 connects one side of the front portion 101 and the rear portion 102 and may form one side of the dehumidifier.

The second side portion 104 connects the other side of the rear portion 102 of the front portion 101 and may form the other side of the dehumidifier. The second side portion 104 may be disposed to face the first side portion 103.

The upper portion 105 may form a discharge part 106 that discharges air from the dehumidifier 10. The discharge part 106 may be provided with a discharge vane 107 that controls opening or closing of the discharge part 106.

The upper portion 105 may include a display part 108 that outputs operation information of the dehumidifier 10. The display part 108 may be provided with an input part for inputting operation commands.

The display part 108 is disposed at a location adjacent to the front portion 101 of the upper surface portion 105, and the discharge part 106 may be formed at a location adjacent to the rear portion 102 of the upper portion 105.

When a user approaches the dehumidifier 10, the user may easily operate the display part 108 by approaching the front portion 101 in a direction closer to the front portion 101. In addition, since the tanks 250 and 260 provided in the dehumidifier 10 are detachably provided on the front portion 101, user accessibility and convenience of operation may be improved.

Tanks 250 and 260 for storing water may be provided at the lower part of the dehumidifier 10 so that they may be mounted or detached.

The tanks 250 and 260 may include a drain tank 250 in which condensed water is stored after water vapor separated from the dehumidification module 300 is condensed in the heat exchanger 160. The drain tank 250 may include a first handle 258 that the user may hold.

The tanks 250 and 260 may include a water supply tank 260 that stores water to be supplied to the dehumidification module 300 in order to improve the moisture separation characteristics of the dehumidification module 300. The water supply tank 260 may include a second handle 268 that the user may hold.

The dehumidifier 10 may further include an auxiliary display part 280 that provides information regarding whether the tanks 250 and 260 are mounted. The auxiliary display part 280 may be provided in the front portion of the first partition wall 121. The auxiliary display part 280 may provide a notification regarding emptying or supplying water to the tanks 250 and 260, based on the water levels of the tanks 250 and 260.

When the tanks 250 and 260 are mounted, the auxiliary display part 280 may be provided at a location shielded by the tanks 250 and 260. For example, the tanks 250 and 260 are made of a transparent material, so even if the tanks 250 and 260 are mounted, the information output from the auxiliary display part 280 may be visible from the outside.

A base 210 is provided on the lower portion the dehumidifier 10, and the base 210 may function as a support plate that forms the machine room of the dehumidifier 10. A plurality of legs 109 placed on the ground may be provided on the lower side of the base 210.

The dehumidifier 10 may include a first part A forming an upper portion and a second part B forming a lower portion. The first part A may be referred to as an "upper part" and the second part B may be referred to as a "lower part."

Inside the main body 100, a first partition wall 121 that divides a first space (upper space) where the components constituting the first part A are installed and a second space (lower space) where the components constituting the second part B are installed may be provided.

Components constituting the first part A may include a dehumidification module 300, a fan 150, and a heat exchanger 160.

The components constituting the first part A may further include a valve device 170 and a supply pipe 172 that supply at least some of the air discharged from the fan 150 to the dehumidification module 300.

Components constituting the second part B may include a vacuum pump 230 and tanks 250 and 260. The tanks 250 and 260 may include a drain tank 250 and a water supply tank 260.

The vacuum pump 230 may be aligned below the fan 150 and the heat exchanger 160, and the tanks 250 and 260 may be aligned below the dehumidification module 300.

The components constituting the first part A or the second part B may be connected to the water supply tank 260 and include a water pump 180 and a water supply connection pipe 185.

The dehumidification module 300 may be installed on the upper surface of the first partition wall 121.

The dehumidification module 300 may be disposed inside the first suction part 110a. Accordingly, the dehumidification module 300 may be disposed so that air flowing into the first part A through the first suction part 110a passes.

The first part A may further include a second partition wall 123 that divides the installation space of the dehumidification module 300 and the installation space of the fan 150. The second partition wall 123 allows the first suction flow to pass through the dehumidification module 300 in the first suction part 110a and the second suction flow to pass through the heat exchanger 160 in the second suction part 115a to be separated from each other.

The flow rate of the first suction flow and the flow rate of the second suction flow may be formed differently. Since the first suction flow and the second suction flow are separated by the second partition wall 123, it is possible to prevent flow loss from occurring due to a pressure difference between the mutual flows.

The flow rate of the first suction flow may be greater than the second suction flow rate. For example, the flow rate of the second suction flow may be formed at a level of 60% of the flow rate of the first suction flow rate. For example, the first suction flow rate may be generated by about 170 CMH and the second suction flow rate may be generated by about 100 CMH.

The first suction flow is a flow of air to be dehumidified and requires a large amount, but the second suction flow may require a relatively small amount to condense moisture in the heat exchanger 160.

The fan 150 may be controlled so that the suction flow rate of the first suction side where the first suction flow is suctioned is greater than the second suction side where the second suction flow is suctioned.

The dehumidification module 300 may be disposed in the space between the second partition wall 123 and the first suction part 110a. The space between the second partition wall 123 and the first suction part 110a may be referred to as a "dehumidification module space part."

The fan 150 and the heat exchanger 160 may be disposed in the space between the second partition wall 123 and the second suction part 115a. The space between the second partition wall 123 and the second suction part 115a may be referred to as a "fan space part" or "heat exchanger space part."

The air suctioned through the first suction part 110a may be separated from moisture after passing through the dehumidification module 300. The moisture-separated air may be suctioned into the suction side of the fan 150 after passing through the second partition wall 123.

The fan 150 may include a bidirectional suction fan that suctions and discharges air from both directions. In other words, the fan 150 may include a two-way centrifugal fan that suctions air in axial directions on both sides and discharges the air in radial directions.

The suction side of the fan 150, where the air passing through the dehumidification module 300 is suctioned, may be referred to as the "first suction side." In other words, the first suction flow may be understood as an air flow flowing from the first suction part 110a to the first suction side of the fan 150.

The dehumidification module 300 may be detachably mounted inside the main body 100.

The dehumidifier 10 may further include a module mounting guide 125 that guides the mounting of the dehumidification module 300. The module mounting guide 125 may form a portion of the first part A.

The module mounting guide 125 is provided inside the main body 100 and may be connected to the second partition wall 123. The module mounting guide 125 may extend from the second partition wall 123 toward the first suction part 110a.

A plurality of module mounting guides 125 are provided, and the plurality of module mounting guides 125 may be spaced apart from each other. The dehumidification module 300 may be mounted in the space between the plurality of module mounting guides 125.

The plurality of module mounting guides 125 may be disposed adjacent to or in contact with both sides of the dehumidification module 300.

The heat exchanger 160 may be disposed inside the second suction part 115a. Accordingly, the heat exchanger 160 may be disposed so that air flowing into the first part A through the second suction part 115a passes.

The heat exchanger 160 may be disposed between the second suction part 115a and the fan 150. Accordingly, the air suctioned through the second suction part 115a may pass through the heat exchanger 160 and then be suctioned into the suction side of the fan 150. At this time, the air may condense the water vapor while exchanging heat with the water vapor separated from the dehumidification module 300.

The suction side of the fan 150, where the air passing through the heat exchanger 160 is suctioned, may be referred to as the "second suction side." In other words, the second suction flow may be understood as an air flow flowing from the second suction part 115a to the second suction side of the fan 150.

The first suction flow and the second suction flow are suctioned in the axial direction of the fan 150 and discharged in the radial direction, and then may be discharged through the discharge part 106 provided on the upper portion 105 of the dehumidifier 10.

The second part B may be provided on the lower side of the first partition wall 121.

The second part B may further include a third partition wall 126 that divides the installation space of the vacuum pump 230 and the installation space of the tanks 250 and 260. The third partition wall 126 may partition the installation space of the vacuum pump 230 and the installation space of the tanks 250 and 260 in the front and rear direction.

By the third partition wall 126, the noise generated by the vacuum pump 230 may be prevented from being transmitted to the front side of the dehumidifier 10, In other words, to the installation space of the tanks 250 and 260 that users often access.

The third partition wall 126 can easily provide an installation area for sensors 256 and 266 for detecting water levels in the tanks 250 and 260 and a delivery path for condensate to be delivered to the drain tank 250.

The third partition wall 126 is connected to the base 210 forming the lower portion of the dehumidifier 10 and may be configured to protrude upward from the base 210.

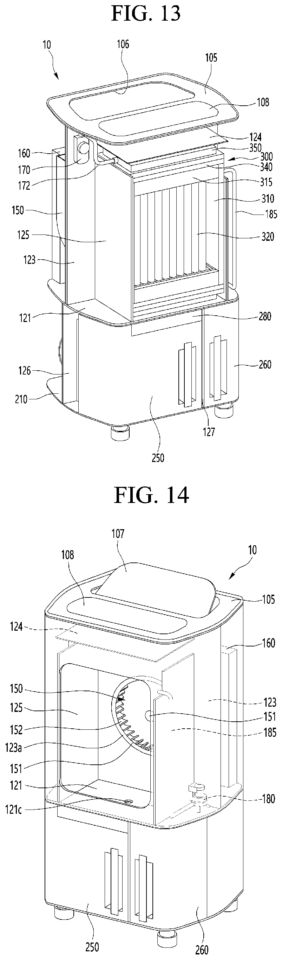

The second part B may further include a fourth partition wall 127 (see FIG. 13) that divides the installation space of the tanks 250, 260 into the installation space of the drain tank 250 and the installation space of the water supply tank 260. The fourth partition wall 127 may divide the installation space of the drain tank 250 and the installation space of the water supply tank 260 in the left and right direction.

The tanks 250 and 260 may be detachably mounted on the dehumidifier 10.

The second part B may include a tank mounting guide 128 provided on both left and right sides of the base 210 to guide the mounting of the tanks 250 and 260.

The tank mounting guide 128 may include a first mounting guide 128a that guides the mounting of the drain tank 250. The first mounting guide 128a is connected to the base 210 and may be configured to protrude upward from the base 210.

The drain tank 250 may be detachably mounted in the space between the fourth partition wall 127 and the first mounting guide 128a. The first mounting guide 128a may be disposed adjacent to or in contact with one side of the drain tank 250.

The tank mounting guide 128 may include a second mounting guide 128b that guides the mounting of the water supply tank 260. The second mounting guide 128b is connected to the base 210 and may be configured to protrude upward from the base 210.

The water supply tank 260 may be detachably mounted in the space between the fourth partition wall 127 and the second mounting guide 128b. The second mounting guide 128b may be disposed adjacent to or in contact with one side of the water supply tank 260.

The base 210 may include a rail 215 that guides the mounting of the tanks 250 and 260. The rail 215 protrudes from the base 210 and may be configured to extend in the direction in which the tanks 250 and 260 are mounted, In other words, in the front and rear direction. The rail 215 may be provided on the lower side of the drain tank 250 and the lower side of the water supply tank 260, respectively.

The plurality of rails 215 may be inserted into the rail groove formed on the lower surface of the drain tank 250 and the rail groove formed on the lower surface of the water supply tank 260.

The dehumidifier 10 may include air supply devices 170 and 172 that supply air to the dehumidification module 300 in order to improve the dehumidification performance of the dehumidification module 300. The air supply devices 170 and 172 may be configured to supply at least some of the air discharged from the fan 150 to the dehumidification module 300.

The air supply devices 170 and 172 may include a valve device 170 disposed on the discharge side of the fan 150. For example, the valve device 170 may be disposed on the second partition wall 123. In particular, the valve device 170 may be disposed at a position adjacent to the upper end of the second partition wall 123 adjacent to the discharge side of the fan 150.

At least some of the air discharged from the fan 150 may flow into the valve device 170 through the guide hole. The guide hole may be formed in the second partition wall 123.

The valve device 170 may be installed in the guide hole.

The air supply devices 170 and 172 are connected to the valve device 170 and may further include a supply pipe 172 that supplies air that has passed through the valve device 170 to the dehumidification module 300. The supply pipe 172 may be connected to the connection port of the dehumidification module 300.

The dehumidifier 10 may include a connection pipe 235 through which water vapor separated from the dehumidification module 300 flows and a vacuum pump 230 connected to the connection pipe 235. The connection pipe 235 may be referred to as a "water vapor connection pipe."

The connection pipe 235 includes a first connection pipe which is connected to the dehumidification module 300 and connected to the suction side of the vacuum pump 230, and the separated water vapor from the dehumidification module 300 may be suctioned into the vacuum pump 230 through the first connection pipe.

The first connection pipe extends from the lower surface of the first partition wall 121, and the first partition wall 121 may have a port communication hole 121c (see FIG. 6) connected to the dehumidification module 300.

The connection pipe 235 is connected to the discharge side of the vacuum pump 230 and includes a second connection pipe connected to the heat exchanger 160, and high-temperature water vapor discharged from the vacuum pump 230 may flow into the heat exchanger 160 through the second connection pipe.

The water vapor passing through the vacuum pump 230 may be compressed by the vacuum pump 230 and have a high temperature state, for example, temperature of about 45 to 50°C. The vacuum pump 230 may also be referred to as a "vacuum compression pump."

The water vapor passing through the vacuum pump 230 may form a flow rate of less than about 5% of the total suction flow rate of the system, In other words, the flow rate suctioned through the first suction part 110a. Therefore, the water vapor may be sufficiently converted into condensate by exchanging heat with the air suctioned through the second suction part 115a.

The second connection pipe may be connected to the inlet port 121a (see FIG. 6) of the first partition wall 121. The inlet port 121a may be coupled to the inlet part of the heat exchanger 160.

The heat exchanger 160 may be configured to exchange heat between the air suctioned in from the second suction part 115a and the water vapor flowing through the second connection pipe. For example, the second connection pipe 235b may be connected to the lower end portion of the heat exchanger 160.

The dehumidifier 10 further includes a condensate pipe 236 through which water condensed in the heat exchanger 160 flows, and the condensate pipe 236 may be connected to the discharge side of the heat exchanger 160. For example, the condensate pipe 236 may be connected to the lower end portion of the heat exchanger 160.

The condensate pipe 236 is connected to the discharge port 121b (see FIG. 6) of the first partition wall 121 and may extend from the lower surface of the first partition wall 121.

The condensate pipe 236 is provided in the second part B and may be disposed to communicate with a space where the drain tank 260 is mounted.

The dehumidifier 10 is fluidly connected to the water tank 260 and may further include a water pump 180 that provides driving force to supply water from the water supply tank 260 to the dehumidification module 300.

For example, the water pump 180 is disposed in the first part A and may be seated on the upper side of the first partition wall 121. However, it is not limited to this, and the water pump 180 may be placed in the second part B.

The dehumidifier 10 is connected to the water pump 180 and may further include a water supply connection pipe 185 that delivers water from the water supply tank 260 to the dehumidification module 300.

The water supply connection pipe 185 is connected to the duct 263 of the water supply tank 260 and may include a first connection pipe 185a that delivers water from the water supply tank 260 to the water pump 180. The first connection pipe 185a may pass through the first partition wall 121 and be connected to the water pump 180.

The first partition wall 121 may include a water supply through-hole 121d (see FIG. 6) through which the first connection pipe 185a passes.

The water supply connection pipe 185 is connected to the water supply pump 180 and may include a second connection pipe 185b extending to the dehumidification module 300. The second connection pipe 185b may be connected to the water supply port of the dehumidification module 300.

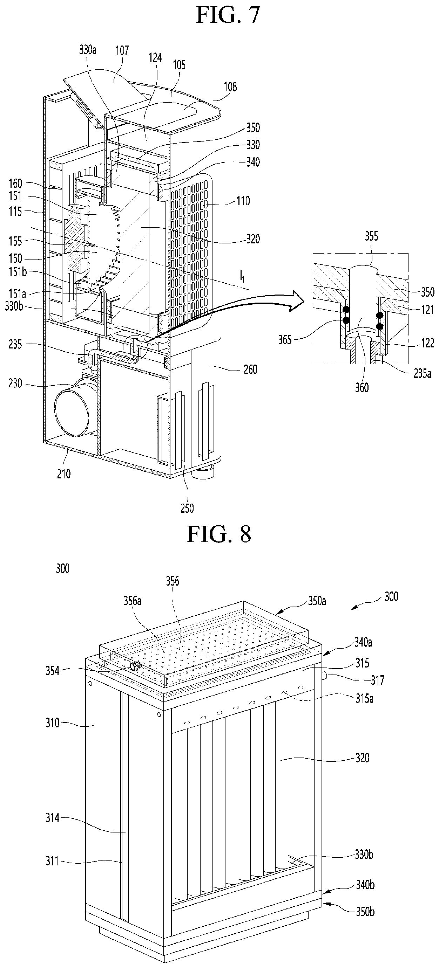

FIG. 6 is an exploded perspective view illustrating a dehumidifier according to an embodiment of the present disclosure, and FIG. 7 is a cross-sectional view taken along line 7-7 in FIG. 1.

Referring to FIG. 6, the dehumidifier 10 according to an embodiment of the present disclosure may include a main body 100 that accommodates a plurality of components for dehumidifying air.

The main body 100 may include a front portion 101, a rear portion 102, two side portions 103 and 104, and a upper portion 105.

The upper portion 105 may consist of a detachable plate. The upper portion 105 may be coupled to the open upper end portion of the main body 100.

The upper portion 105 may include a discharge part 106 that discharges air, a discharge vane 107 that opens and closes the discharge part 106, and a display part 108.

A sealing member 105a may be provided between the open upper end portion of the main body 100 and the upper portion 105 to prevent air leakage.

The main body 100 may include a first suction part 110a through which the first suction flow is suctioned. The first suction part 110a is formed by penetrating at least a portion of the front portion 101, and a first suction grill 110 may be mounted on the first suction part 110a.

The main body 100 may include a second suction part 115a through which the second suction flow is suctioned. The second suction part 115a is formed by penetrating at least a portion of the rear portion 102, and a second suction grill 115 may be mounted on the second suction part 115a.

Between the first suction part 110a and the second suction part 115a, a dehumidification module 300, a fan 150, and heat exchanger 160 may be disposed in sequence in the direction from the first suction part 110a toward the second suction part 115a.

The first partition wall 121 that divides the dehumidifier 10 into the first part A and the second part B may be formed with communication parts 121a, 121b, and 121c through which water vapor or condensate passes. The communication parts 121a, 121b, and 121c may include a port communication hole 121c that guides the water vapor separated from the dehumidification module 300 to flow to the vacuum pump 230.

The communication parts 121a, 121b, and 121c may include an inlet port 121a that guides high-temperature water vapor passing through the vacuum pump 230 to flow into the heat exchanger 160.

The communication parts 121a, 121b, and 121c may include a discharge port 121b that guides the condensed water condensed in the heat exchanger 160 to flow into the drain tank 250.

The dehumidifier 10 may include a second partition wall 123 which extends upward from the first partition wall 121 and divides
the internal space of the first part A into a space where the dehumidification module 300 is located and a space where the fan 150, and a heat exchanger are located.

The second partition wall 123 may have a fan suction part 123a which is formed on the outlet side of the dehumidification module 300 based on the first suction flow and guides the air passing through the dehumidification module 300 to the suction side of the fan 150.

The fan suction part 123a may include a round suction guide (bell mouth) so that air may be smoothly suctioned in the axial direction of the fan 150.

The dehumidifier 10 may include two module mounting guides 125 that protrude from the second partition wall 123 and guide the mounting of the dehumidification module 300. The module mounting guide 125 may protrude from the second partition wall 123 in a direction toward the first suction part 110a.

The two module mounting guides 125 may be disposed on both sides of the fan suction part 123a. The front and rear width of the dehumidification module 300 supported by the two module mounting guides 125 may be larger than the diameter of the fan suction part 123a. Accordingly, the dehumidification module 300 may cover the fan suction part 123a.

The first suction flow passes through the second partition wall 123 through the fan suction part 123a and may be suctioned into the first suction side of the fan 150.

The second suction flow suctioned through the second suction part 115a may pass through the heat exchanger 160 and then be suctioned into the second suction side of the fan 150.

The dehumidifier 10 may further include a plate 124 coupled to the second partition wall 123. For example, the plate 124 is coupled to the upper end portion of the second partition wall 123 and may protrude in a direction toward the front portion 101.

The plate 124 may be disposed to partition the space between the upper portion 105 and the upper end of the dehumidification module 300. By driving the vacuum pump 230, vacuum pressure is applied to the dehumidification module 300, and the plate 124 may block the vacuum pressure from acting on the upper portion 105.

The main body 100 may include an opening to form an inlet space in which the tanks 250 and 260 are mounted. The opening is formed from the front portion 101 to both side portions 103 and 104 and may be configured to be open in the direction in which the tanks 250 and 260 are pulled in or out.

Referring to FIG. 7, the first part A may include a fan motor 155 for driving the fan 150. The fan motor 155 may be coupled to the central hub of the fan 150. The shaft of the fan motor 155 may be coupled to the hub 151 in the axial direction (front and rear direction).

The center line ℓ1 passing through the center of the fan motor 155 in the front and rear direction may pass through the dehumidification module 300, the fan suction part 123a, and the heat exchanger 160. For example, the center line ℓ1 may pass through the center of the dehumidification module 300, the center of the fan suction part 123a, and the center of the heat exchanger 160.

The dehumidification module 300 may be seated on the first partition wall 121.

The dehumidification module 300 may include a dehumidification member 320 that selectively separates moisture.

The dehumidification module 300 may further include a fixing part 330 supporting an end portion of the dehumidification member 320 and a first cap 340 in which the fixing part 330 is filled.

The dehumidification module 300 may further include a second cap 350 that covers the first cap 340.

The fixing part 330, the first cap 340, and the second cap 350 may be provided on both sides of the dehumidification member 320, respectively. In other words, the fixing part 330, the first cap 340, and the second cap 350 may be provided on the upper and lower sides of the dehumidification member 320, respectively.

The lower surface of the dehumidification module 300 may be coupled to the first partition wall 121.

The dehumidification module 300 may include a connection port 360 protruding from the second cap 350 in a direction toward the first partition wall 121. The connection port 360 may be coupled to the protrusion 122 of the first partition wall 121. The protrusion 122 may protrude downward from the lower surface of the first partition wall 121.

For example, the connection port 360 may be inserted into the protrusion 122.

A sealing member 365 may be provided on the outer peripheral surface of the connection port 360 to seal the space between the protrusion 122 and the connection port 360. By the sealing member 365, the connection port 360 and the protrusion 122 may be firmly coupled.

A plurality of sealing members 365 may be provided.

A cap hole 355 is formed in the second cap 350, and the cap hole 355 may extend to the connection port 360. Moisture (water vapor) separated from the dehumidification module 300 may be discharged to the outside of the dehumidification module 300 through the cap hole 355.

A connector 235 that guides the flow of water vapor, in other words, a first connector, may be coupled to the protrusion 122. The first connection pipe may extend from the protrusion 122 to the vacuum pump 230 and be connected to the vacuum pump 230.

The first connection pipe 235a may communicate with the connection port 360 inside the protrusion 122.

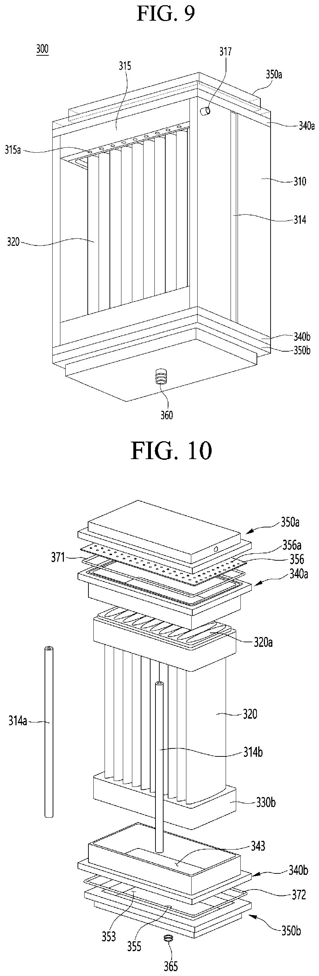

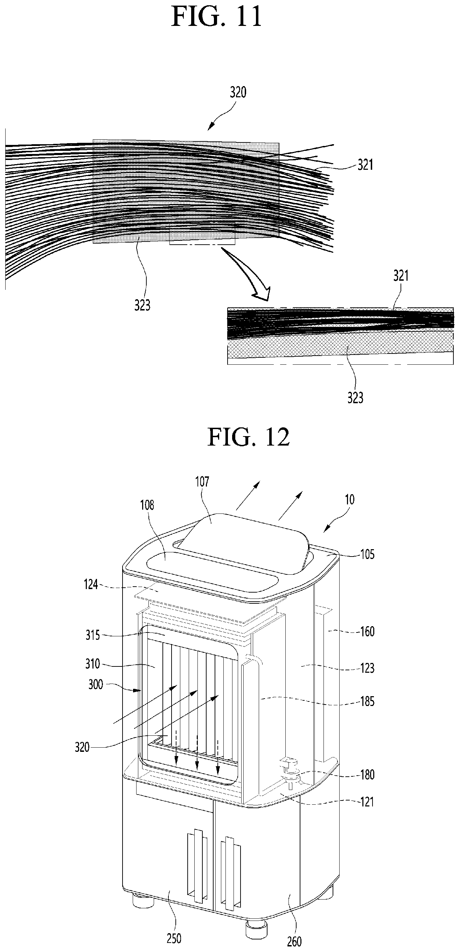

FIG. 8 is a top perspective view illustrating the configuration of a dehumidification module according to an embodiment of the present disclosure, FIG. 9 is a lower perspective view illustrating the configuration of a dehumidification module according to an embodiment of the present disclosure, FIG. 10 is an exploded perspective view illustrating a dehumidification module according to an embodiment of the present disclosure, and FIG. 11 is a view illustrating the configuration of a dehumidification member according to an embodiment of the present disclosure.

Referring to FIGS. 7, 8 to 11 together, the dehumidification module 300 according to an embodiment of the present disclosure may be detachably mounted on the dehumidifier 10.

The dehumidification module 300 may include a dehumidification member 320 capable of selectively separating moisture from the suctioned air.

The dehumidification member 320 may include a membrane.

In detail, the dehumidification member 320 may include polymer membrane fibers 321 having a hollow fiber structure with excellent selectivity for moisture. The polymer membrane fiber 321 may be cut to a predetermined length and used. The polymer membrane fiber 321 may be referred to as a "hollow fiber membrane."

For example, the polymer membrane fiber 321 may be configured to have a diameter of about 400 to 420 µm.

The polymer membrane fiber 321 may be provided in multiple strands.

The dehumidification member 320 may further include a packing member 323 surrounding the plurality of polymer membrane fibers 321 to fix the polymer membrane fibers 321 composed of multiple strands.

By the packing member 323, the plurality of polymer membrane fibers 321 may form a bundle. The bundle of dehumidification members 320 may constitute a single dehumidification member.

The packing member 323 is made of a resin material and has strong resistance to water and may inhibit bacterial growth or mold growth. In addition, the packing member 323 may perform the function of protecting the dehumidification member 321 by blocking large dust in the air. For example, the packing member 323 may be made of polypropylene.

The dehumidification module 300 may be configured to provide a plurality of such dehumidification members 320. For example, as illustrated in FIG. 8, the dehumidification module 300 may be configured to have about 10 dehumidification members 320 disposed side by side.

The dehumidification module 300 may further include fixing parts 330a and 330b configured by a potting method to fix the dehumidification member 320. The fixing parts 330a and 330b may be formed by filling and solidifying the inside of the first caps 340a and 340b in a liquid form to fix the positions of the plurality of dehumidification members 320.

For example, the fixing parts 330a and 330b may be made of urethane or epoxy material.

The fixing parts 330a and 330b may include a first fixing part 330a for fixing one end portion of the dehumidification member 320 and a second fixing part 330b for fixing the other end portion thereof.

The first caps 340a and 340b may be referred to as "potting caps."

The first fixing part 330a may be disposed inside the upper end cap 340a provided on the upper side of the dehumidification member 320 among the first caps 340a and 340b. The second fixing part 330b may be disposed inside the lower end cap 340b provided on the lower side of the dehumidification member 320 among the first caps 340a and 340b.

A potting space 343 may be formed inside the first caps 340a and 340b so that the fixing parts 330a and 330b may be disposed.

The end portion 320a of the dehumidification member 320 fixed by the fixing parts 330a and 330b may be exposed to the outside of the fixing parts 330a and 330b.

The dehumidification module 300 may further include second caps 350a and 350b that cover the first caps 340a and 340b. The second caps 350a and 350b may be referred to as "end caps."

The second caps 350a and 350b may include a first end cap 350a that covers the upper end cap 340a and a second end cap 350b that covers the lower end cap 340b.

The first end cap 350a may be provided with a connection port 354 through which at least some of the air discharged from the fan 150 flows. Air that has passed through the valve device 170 and the supply pipe 172 may flow into the interior of the first end cap 350a through the connection port 354.

The dehumidification module 300 may further include a distribution plate 356 provided inside the first end cap 350a. The distribution plate 356 may be supported on the end portion of the upper end cap 340a and shielded by the first end cap 350a.

The connection port 354 may communicate with a space (distribution space) between the distribution plate 356 and the upper surface of the first end cap 350a. Accordingly, air may flow into the distribution space through the connection port 354 and flow toward the distribution plate 356.

A plurality of distribution holes 356a may be formed in the distribution plate 356. Air flows toward the end portion 320a of the dehumidification member 320 through the plurality of distribution holes 356a and may flow toward the inner peripheral surface forming the hollow portion of the dehumidification member 320.

Due to the pressure difference between the inside and outside of the dehumidification member 320, water vapor may accumulate on the inner wall of the dehumidification member 320 when the water vapor passes through the dehumidification member 320. Such water vapor may deteriorate the dehumidification performance of the dehumidification member 320.

In order to solve this problem, at least some of the air discharged from the fan 150 is bypassed to pass through the distribution hole 356a and supplied to the dehumidification member 320 to remove water vapor accumulated on the inner wall.

A recessed part 353 may be formed in the second caps 350a and 350b. The recessed part 353 may form a space between the end portion 320a of the dehumidification member 320 and the end surfaces of the second caps 350a and 350b.

The recessed part 353 of the first end cap 350a forms a space between the distribution plate 356 and the upper end surface of the first end cap 350a, and thus the flow path of air flowing into the distribution hole 356a may be formed.

The recessed part 353 of the second end cap 350b may form a flow path through which moisture (water vapor) separated from the dehumidification member 320 flows into the cap hole 355.

The dehumidification module 300 may further include a support 314 to reinforce the one-way supporting force of the dehumidification member 320. For example, the support 314 may reinforce the vertical support of the dehumidification member 320.

Since the dehumidification member 320 is formed to be relatively long in the vertical direction, the support 314 can provide the supporting force in the vertical direction.

The support 314 may extend between the upper end cap 340a and the lower end cap 340b. One end portion of the support 314 may be connected to the upper end cap 340a and the other end portion may be connected to the lower end cap 340b.

For example, the support 314 may have the shape of a bar.

A plurality of supports 314 are provided, and the plurality of supports 314 may include a first support 314a provided on one side of the upper end cap 340a and the lower end cap 340b, and a second support 314b provided on the other side thereof.

The dehumidification module 300 may include a housing 310 disposed to surround at least a portion of the dehumidification member 320. The housing 310 may include parts that cover both sides of the plurality of dehumidification members 320 and parts that cover a portion of the upper end portion and a portion of the lower end portion of the plurality of dehumidification members 320.

The housing 310 may function as a member that blocks the open space around the dehumidification members 320 to prevent air from leaking (loss) into the space surrounding the plurality of dehumidification members 320 and the support 314.

A coupling hole 311 to which the support 314 is coupled may be formed in the housing 310.

The housing 310 may include a water supply duct 315 for supplying water to the dehumidification member 320. The water supply duct 315 may be provided in a part that covers a portion of the upper end portion of the plurality of dehumidification members 320.

Water supplied from the water supply pump 180 may flow through the water supply duct 315. A water supply hole 315a may be formed on the lower surface of the water supply duct 315 to supply water to the dehumidification member 320.

A plurality of water supply holes 315a are formed, and the plurality of water supply holes 315a may be arranged in the direction in which the plurality of dehumidification members 320 are arranged, In other words, in the left and right direction based on FIG. 1.

The water supply hole 315a may be located on the upper front side of the dehumidification member 320. Even if water is sprayed toward the front of the dehumidification member 320 through the water supply hole 315a, the water may be in contact with the dehumidification member 320 due to the suction force of the fan 150.

Water may be supplied intermittently through the water supply hole 315a.

The housing 310 may include a water supply port 317 connected to the water supply connection pipe 185, In other words, the second connection pipe 185b. The water supply port 317 may be connected to the water supply duct 315. For example, the water supply port 317 may pass through the housing 310 and be connected to the side of the water supply duct 315.

Water pumped from the water pump 180 may flow into the water supply port 317 through the second connection pipe 185b and flow into the water supply duct 315.

When the dehumidifier 10 is operated in an environment where absolute humidity is very low, the moisture separation performance of the dehumidification member 320 may be weakened. Therefore, in order to improve the moisture separation performance, water can be supplied to the dehumidification member 320 (improvement of wettability of the dehumidification member).

In order to form such a water supply flow path, the present embodiment may provide the water pump 180, connection pipe 185, and water supply duct 315.

The dehumidification module 300 may further include sealers 371 and 372 for sealing the space between the first caps 340a and 340b and the second caps 350a and 350b.

The sealers 371 and 372 may include a first sealer 371 provided between the upper end cap 340a and the first end cap 350a. The first sealer 371 may be in contact with the upper end cap 340a and the first end cap 350a.

The sealers 371 and 372 may include a second sealer 372 provided between the lower end cap 340b and the second end cap 350b. The second sealer 372 may be in contact with the lower end cap 340b and the second end cap 350b.

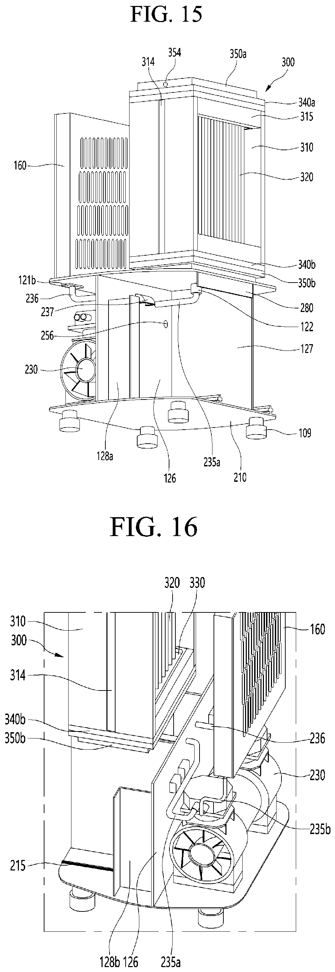

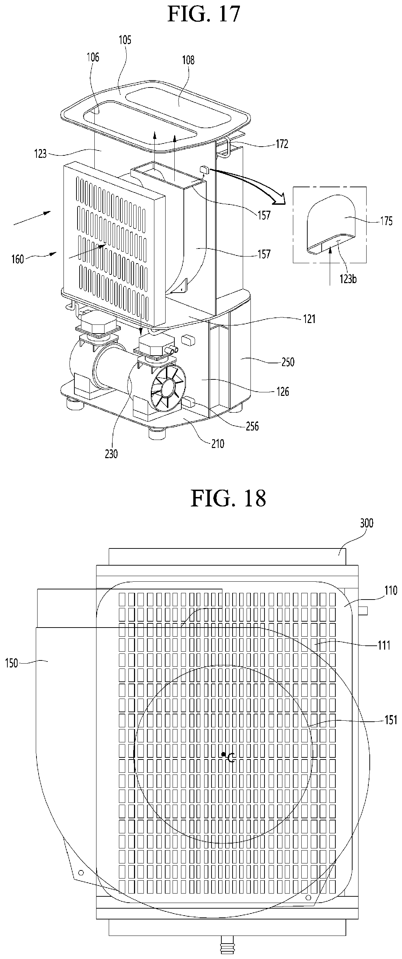

FIG. 12 is a view illustrating a state where the first suction flow and discharge flow are generated in the dehumidifier according to an embodiment of the present disclosure, FIG. 13 is a top perspective view illustrating the configuration of the first part and the second part in the dehumidifier according to an embodiment of the present disclosure, FIG. 14 is a perspective view illustrating the internal configuration of a dehumidifier in a state where the dehumidification module according to an embodiment of the present disclosure is removed, FIG. 15 is a lower perspective view illustrating the configuration of the first part and the second part in the dehumidifier according to an embodiment of the present disclosure, FIG. 16 is a view illustrating a partial configuration of a dehumidifier according to an embodiment of the present disclosure, and FIG. 17 is a view illustrating a state where a portion of the discharge flow of the fan according to an embodiment of the present disclosure flows into the inlet guide.

Referring to FIGS. 12 and 13, in the dehumidifier 10 according to an embodiment of the present disclosure, a first suction flow may be generated as the main flow of air to be dehumidified by driving the fan 150.

When the fan 150 is driven, air can be suctioned in through the first suction part 110a in a direction crossing the front portion 101, for example, in a perpendicular direction.

The air suctioned in from the first suction part 110a may pass in the direction in which the plurality of dehumidification members 320 extend, In other words, in the direction (front and rear direction) that intersects the vertical directions.

By driving the vacuum pump 230, by a pressure difference generated between the outside and inside of the dehumidification member 320, a negative pressure lower than the external pressure may be formed inside the dehumidification member 320.

In the process of air passing through the dehumidification member 320, moisture contained in the air may contact the surface of the dehumidification member 320 and be adsorbed. In addition, the adsorbed moisture may be selectively separated from the air by diffusing and then desorbing from the surface.

The separated moisture flows downward inside the dehumidification member 320 and may flow into the cap hole 355 of the second end cap 350b. In other words, the flow direction (downward) of the separated moisture (dotted arrow in FIG. 12) may form a direction perpendicular to the flow direction (front and rear direction) of the air (solid line arrow in FIG. 12).

Referring to FIG. 14, the air from which the moisture has been separated may be suctioned in the axial direction of the fan 150. At this time, the air that has passed through the dehumidification module 300 may be suctioned into the hub 151 of the fan 150 through the fan suction part 123a of the second partition wall 123. A fan motor 155 may be coupled to the hub 151.

The fan 150 may include a plurality of blades 152 arranged in the peripheral direction of the hub 151. By rotating the plurality of blades 152, air suctioned in the axial direction (front and rear direction) of the fan 150 may be discharged in the radial direction of the fan 150.

The refrigerant discharged from the fan 150 may flow upward toward the upper portion 105 and be discharged from the discharge part 106.

Referring to FIGS. 15 and 16, the dehumidification module 300 and the heat exchanger 160 may be disposed to be spaced apart from each other with a fan 150 between the dehumidification module 300 and the heat exchanger 160. When the fan 150 is driven, the first suction flow flowing from the dehumidification module 300 to the first suction side of the fan 150 and the second suction flow flowing from the heat exchanger 160 to the second suction side of the fan 150 may be generated.

The fan 150 may be configured as a two-way suction fan so that the first suction flow and the second suction flow may be generated.

With respect to the first partition wall 121, a first connection pipe 235a may be provided on the lower side of the first partition wall 121 to form a water vapor flow path separated from the dehumidification module 300.

The first connection pipe 235a may extend from the lower surface of the dehumidification module 300 to the suction side of the vacuum pump 230. At this time, the first connection pipe 235a may extend to the vacuum pump 230 through the first through-hole of the third partition wall 126.

A second connection pipe 235b may be provided below the first partition wall 121 to form a flow path for water vapor passing through the vacuum pump 230 and flowing into the heat exchanger 160. The second connection pipe 235b may extend from the discharge side of the vacuum pump 230 to the lower surface of the heat exchanger 160.

A condensate pipe 236 may be provided below the first partition wall 121 to discharge condensate generated in the heat exchanger 160. The condensate pipe 236 extends from the lower surface of the heat exchanger 160 and may be coupled to the second through-hole of the second partition wall 126. Condensate flowing through the condensate pipe 236 may flow into the drain tank 250 through the second partition wall 126.

Referring to FIG. 17, the second suction flow of air suctioned from the second suction part 115a may pass through the heat exchanger 160 and then be suctioned into the second suction side of the fan 150.

Additionally, the air is discharged in the radial direction of the fan 150 and may flow upward through the fan discharge part 157 provided at the upper end of the fan 150.

At least some of the air that has passed through the fan 150 may flow into the guide hole 123b adjacent to the upper end portion of the fan 150. The guide hole 123b may be formed to pass through the second partition wall 123.

The second partition wall 123 may include an inlet guide 175 that guides air to flow into the guide hole 123b. The inlet guide 175 may protrude from the second partition wall 123 toward the space where the fan 150 is located.

The lower surface of the inlet guide 175 is open, and the open lower surface may be introduced into the guide hole 123b. Air may flow into the valve device 170 provided on the partition 123 through the inlet guide 175 and the guide hole 123b.

The valve device 170 may be disposed in the guide hole 123b in a space where the dehumidification module 300 is installed. In other words, the inlet guide 175 and the valve device 170 may be disposed opposite to each other with respect to the second partition wall 123.

A supply pipe 172 is connected to the valve device 170, and the supply pipe 174 may be connected to the connection port 354 of the dehumidification module 300.

The valve device 170 is provided to be open or closed, and when the valve device 170 is opened, air passes through the valve device 170 and the supply pipe 172 and then may be supplied to the distribution plate 356 of the dehumidification module 300.

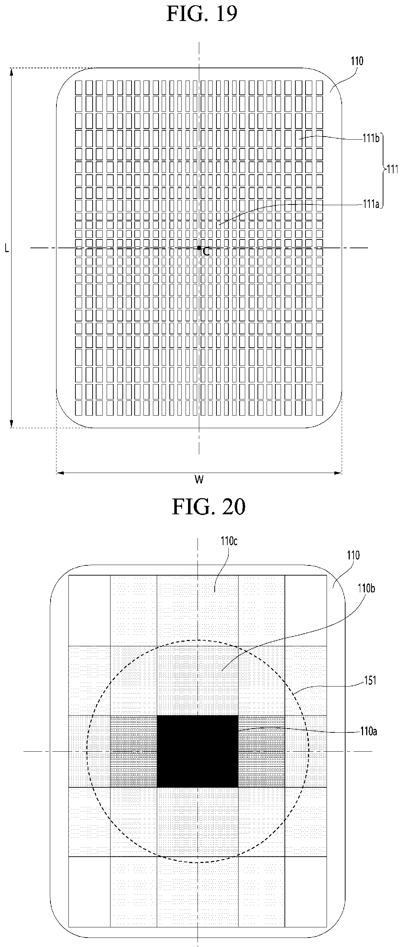

FIG. 18 is a view illustrating a state where the first suction grill, the dehumidification module, and the fan are arranged in the front and rear direction according to an embodiment of the present disclosure, FIG. 19 is a front view illustrating the first suction grill according to an embodiment of the present disclosure, and FIG. 20 is a view illustrating the areas where air holes are formed in the first suction grill according to an embodiment of the present disclosure.

Referring to FIGS. 18 to 20, according to an embodiment of the present disclosure, the first suction grill 110, the dehumidification module 300, and the fan 150 may be disposed to face each other in the front and rear direction. The dehumidification module 300 may be disposed between the first suction grill 110 and the fan 150.

The center line passing through the center C of the first suction grill 110 in the front and rear direction may pass through the dehumidification module 300 and the fan 150. In other words, the center C of the first suction grill 110, the center of the dehumidification module 300, and the center of the fan 150 may be aligned in a straight line. The center C of the first suction grill 110, the center of the dehumidification member 320 of the dehumidification module 300, and the center of the hub 151 of the fan 150 may coincide.

The first suction grill 110 may be formed in a shape corresponding to the shape of the suction side end portion of the dehumidification module 300. The first suction grill 110 may be formed in a shape corresponding to the front surface of the dehumidification module 300.

The first suction grill 110 may be formed in a plate shape. For example, the first suction grill 110 may be formed in the shape of a square plate having a width W extending in the left and right direction, a length L extending in the vertical direction, and a thickness extending in the front and rear direction. In other words, the first suction grill 110 may be formed in the shape of a square plate whose length in the vertical direction is longer than that in the left and right direction.

The first suction grill 110 may be formed to have an area larger than the area of the suction part 151 of the fan 150. The first suction grill 110 may be formed to cover the entire front surface of the suction part 151 of the fan 150.

The first suction grill 110 may be formed to have an area larger than that of the dehumidification member 320. The first suction grill 110 may be formed to cover the entire front surface of the dehumidification member 320. The first suction grill 110 may be formed to be larger than the area of the dehumidification member 320 exposed by the housing 310 of the dehumidification module 300.

A plurality of air holes 111 through which air is suctioned may be formed in the first suction grill 110. The plurality of air holes 111 may be formed penetrating from the front surface to the rear surface of the first suction grill 110. The plurality of air holes 111 may be formed entirely on the outer surface of the first suction grill 110.

Due to this configuration, the air introduced through the first suction grill 110 quickly passes through the dehumidification member 320 of the dehumidification module 300 and may be then suctioned into the suction part 151 of the fan 150. At this time, since the air flow paths of the first suction grill 110, the dehumidification module 300, and the fan 150 are formed in a straight line, air flow resistance may be minimized and the air suction flow rate may be improved.

The plurality of air holes 111 may be formed in a shape corresponding to the shape of the first suction grill 110. For example, the plurality of air holes 111 may be formed in a square shape. The plurality of air holes 111 may be arranged in a lattice shape to form an overall square grill shape.

The plurality of air holes 111 may each be formed to be longer in the vertical direction than in the left and right direction. In this embodiment, since the dehumidification modules 300 and 320 are formed to be longer in the vertical direction compared to the left and right direction based on the suction part 151 of the fan 150, the plurality of air holes 111 are formed to be longer in the vertical direction compared to the left and right direction.

In particular, in order to uniform the flow of air flowing into the dehumidification member 320 through the plurality of air holes 111, in the plurality of air holes 111, the size of the hole may increase as the distance from the center C of the first suction grill 110 increases.

Alternatively, in the plurality of air holes 111, the size of the hole may increase as the distance from the center of the suction part 151 of the fan 150 or the center of the rotation axis of the fan 150 increases.

Alternatively, in the plurality of air holes 111, the size of the hole may increase as the distance from the center of the dehumidification module 300 or the dehumidification member 320 increases.

For example, in the plurality of air holes 111, the size of the hole 111b adjacent to the edge of the first suction grill 110 may be larger than the size of the hole 111a adjacent to the center C of the first suction grill 110.

As another example, in the plurality of air holes 111, the size of the hole may gradually increase as it moves outward in the radial direction, based on the center C of the first suction grill 110.

According to one embodiment, as illustrated in FIG. 20, the first suction grill 110 has a plurality of areas 110a, 110b, 110c, or the like divided radially outward from the center C of the first suction grill 110.

The plurality of regions 110a, 1 10b, and 110c are regions where the plurality of air holes 111 are formed and may include a first region 110a, a second region 110b, and a third region 110c.

The sizes of the air holes 111 included in the first area 110a may be the same.

The sizes of the air holes 111 included in the second area 110b may be the same.

The sizes of the air holes 111 included in the third area 110c may be the same.

However, the size of the air hole 111 included in the second area 110b may be larger than the size of the air hole 111 included in the first area 110a and may be smaller than the size of the air hole 111 included in the third area 110c.

According to this configuration of the present disclosure, in the plurality of air holes 111, the size of the air hole 111 increases as the distance from the center C of the first suction grill 110 increases, so that the flow of air flowing into the dehumidification module 300 may become uniform. When the flow of air flowing into the dehumidification module 300 becomes uniform, the contact area between the dehumidification member 320 and humid air is maximized, thereby improving moisture separation performance.

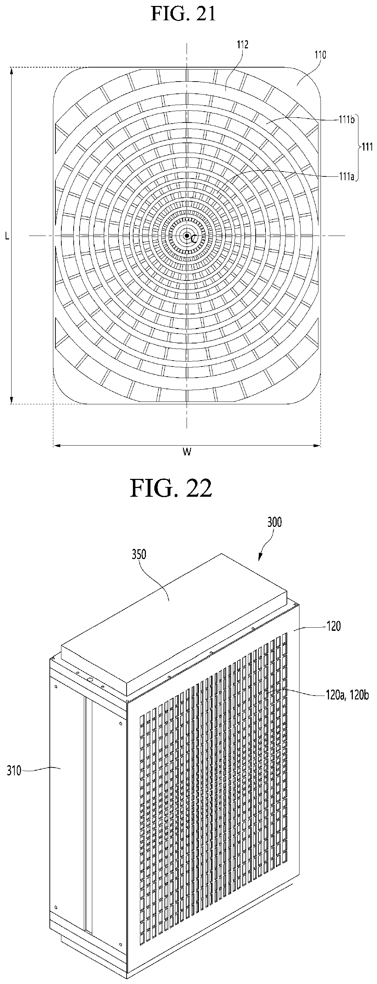

FIG. 21 is a front view illustrating a first suction grill according to another embodiment of the present disclosure.

Referring to FIG. 21, the first suction grill 110 according to another embodiment of the present disclosure may be formed in a plate shape. For example, the first suction grill 110 may be formed in the shape of a square plate having a width W extending in the left and right direction, a length L extending in the vertical direction, and a thickness extending in the front and rear direction. In other words, the first suction grill 110 may be formed in the shape of a square plate that is longer in the vertical direction than in the left and right direction.

The first suction grill 110 may be formed to have an area larger than the area of the suction part 151 of the fan 150. The first suction grill 110 may be formed to cover the entire front surface of the suction part 151 of the fan 150.

The first suction grill 110 may be formed to have an area larger than that of the dehumidification member 320. The first suction grill 110 may be formed to cover the entire front surface of the dehumidification member 320. The first suction grill 110 may be formed to be larger than the area of the dehumidification member 320 exposed by the housing 310 of the dehumidification module 300.

A plurality of air holes 111 through which air is suctioned may be formed in the first suction grill 110. The plurality of air holes 111 may be formed penetrating from the front surface to the rear surface of the first suction grill 110. The plurality of air holes 111 may be formed entirely on the outer surface of the first suction grill 110.

Due to this configuration, the air introduced through the first suction grill 110 quickly passes through the dehumidification member 320 of the dehumidification module 300 and may be then suctioned into the suction part 151 of the fan 150. At this time, since the air flow paths of the first suction grill 110, the dehumidification module 300, and the fan 150 are formed in a straight line, air flow resistance may be minimized and the air suction flow rate may be improved.

The first suction grill 110 may include a plurality of circular grills 112 having the same center and different diameters. The plurality of circular grills 112 may be arranged to be radially spaced apart. The plurality of circular grills 112 may be disposed to be spaced apart at regular intervals in the radial direction. The centers of the plurality of circular grills 112 may coincide with the center of the fan 150.

The plurality of air holes 111 may be formed between the plurality of circular grills 112. The plurality of air holes 111 may be formed in a trapezoidal shape by ribs connecting the plurality of circular grills 112.

In particular, in order to uniform the flow of air flowing into the dehumidification member 320 through the plurality of air holes 111, in the plurality of air holes 111, the size of the hole may increase as the distance from the center C of the first suction grill 110 increases.

Alternatively, in the plurality of air holes 111, the size of the hole may increase as the distance from the center of the suction part 151 of the fan 150 or the center of the rotation axis of the fan 150 increases.

Alternatively, in the plurality of air holes 111, the size of the hole may increase as the distance from the center of the dehumidification module 300 or the dehumidification member 320 increases.

For example, in the plurality of air holes 111, the size of the hole 111b adjacent to the edge of the first suction grill 110 may be larger than the size of the hole 111a adjacent to the center C of the first suction grill 110.

As another example, in the plurality of air holes 111, the size of the hole may gradually increase as it moves outward in the radial direction, based on the center C of the first suction grill 110.

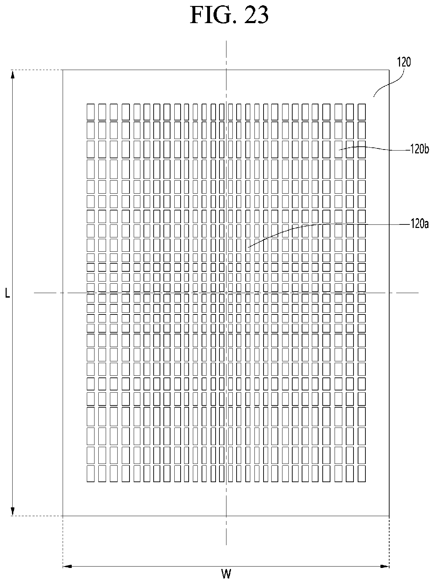

FIG. 22 is a perspective view illustrating a dehumidification module equipped with a dehumidification grill according to another embodiment of the present disclosure, and FIG. 23 is a front view illustrating the dehumidification grill of FIG. 22.

This embodiment is the same as the previously described embodiment in other portions, but differs in that a dehumidification grill is provided in the dehumidification module. Therefore, hereinafter, only the characteristic portions of this embodiment will be described, and the same portions as the previously described embodiment will be used.

Referring to FIGS. 22 and 23, the dehumidifier 10 according to another embodiment of the present disclosure further includes a dehumidification grill 120 coupled to the dehumidification module 300.

Specifically, the dehumidification grill 120 is detachably coupled to the front surface of the dehumidification module 300. The dehumidification grill 120 is coupled to the front surface of the dehumidification module 300 and may guide the flow of air passing through the first suction grill 110.

In this embodiment, the dehumidification grill 120 may replace the function of the first suction grill 110. Therefore, the dehumidification grill 120 may be referred to as a "suction grill." The dehumidification grill 120 may be formed in the same or similar shape and size as the first suction grill 110.

According to this embodiment, the dehumidification grill 120 may be formed in a plate shape. For example, the dehumidification grill 120 may be formed in the shape of a square plate having a width W extending in the left and right direction, a length L extending in the vertical direction, and a thickness extending in the front and rear direction. In other words, the dehumidification grill 120 may be formed in the shape of a square plate that is longer in the vertical direction than in the left and right direction.

The dehumidification grill 120 may be coupled to the outer surface of the housing 310 surrounding the dehumidification member 320. The dehumidification grill 120 may be coupled to the suction side end portion of the housing 310.

The dehumidification grill 120 may be formed to have an area larger than the area of the suction part 151 of the fan 150. The dehumidification grill 120 may be formed to cover the entire front surface of the suction part 151 of the fan 150.

The dehumidification grill 120 may be formed to have a larger area than the area of the dehumidification member 320. The dehumidification grill 120 may be formed to cover the entire front surface of the dehumidification member 320. The dehumidification grill 120 may be formed to be larger than the area of the dehumidification member 320 exposed by the housing 310 of the dehumidification module 300.

A plurality of air holes 120a and 120b through which air is suctioned may be formed in the dehumidification grill 120. The plurality of air holes 120a and 120b may be formed to penetrate from the front surface to the rear surface of the dehumidification grill 120. The plurality of air holes 120a and 120b may be formed entirely on the outer surface of the dehumidification grill 120.

The plurality of air holes 120a and 120b may be formed in a shape corresponding to the shape of the dehumidification grill 120. For example, the plurality of air holes 120a and 120b may be formed in a square shape. The plurality of air holes 120a and 120b may be arranged in a lattice shape to form an overall square grill shape.

The plurality of air holes 120a and 120b may each be formed to be longer in the vertical direction than in the left and right direction. In this embodiment, since the dehumidification modules 300 and 320 are formed to be longer in the vertical direction than in the left and right direction based on the suction part 151 of the fan 150, the plurality of air holes 120a and 120b may be formed to be longer in the vertical direction than in the left and right direction.

In particular, in order to equalize the flow of air flowing into the dehumidification member 320 through the plurality of air holes 120a and 120b, in the plurality of air holes 120a and 120b, the size of the hole may increase as the distance from the center C of the dehumidification grill 120 increases.

Alternatively, in the plurality of air holes 120a and 120b, the size of the holes may increase as the distance from the center of the suction part 151 of the fan 150 or the center of the rotation axis of the fan 150 increases.

Alternatively, in the plurality of air holes 120a and 120b, the size of the hole may increase as the distance from the center of the dehumidification module 300 or the dehumidification member 320 increases.

For example, in the plurality of air holes 120a and 120b, the size of the hole 120b adjacent to the edge of the dehumidification grill 120 may be formed to be larger than the size of the hole 120a adjacent to the center C of the dehumidification grill 120.

As another example, in the plurality of air holes 120a and 120b, based on the center C of the dehumidification grill 120, the size of the hole may gradually increase as it moves outward in the radial direction.

According to an embodiment of the present disclosure, constant temperature dehumidification may be easily implemented without increasing the temperature of the indoor space by selectively separating moisture in the air through a dehumidification module including a membrane without operating a refrigeration cycle.

According to an embodiment of the present disclosure, dehumidification may be accomplished by passing through a dehumidification module without requiring time for stabilization of the refrigeration cycle, so the dehumidification time may be shortened.

According to an embodiment of the present disclosure, separation and condensation of moisture may be easily performed by generating a first suction flow of air to remove moisture and a second suction flow of air to perform heat exchange.

According to an embodiment of the present disclosure, a two-way suction fan is provided so that the first suction flow and the second suction flow may be easily suctioned into the dehumidifier in directions facing each other.

According to an embodiment of the present disclosure, the first direction of the suction flow of air to remove moisture and the second direction of the flow of separated water vapor are configured to be perpendicular to each other, so that moisture separation performance may be improved.

According to an embodiment of the present disclosure, water vapor in the air passing through the dehumidification module may be moved into the inside of the membrane by generating a pressure difference between the inside and outside of the membrane using a vacuum pump.

According to an embodiment of the present disclosure, water vapor separated from the dehumidification module flows into a heat exchanger via a vacuum pump and exchanges heat with indoor air in the heat exchanger, making it easy to remove condensed moisture.

According to an embodiment of the present disclosure, the first part where the fan that generates air flow is disposed is disposed in the upper space of the dehumidifier, so that air suction from the indoor space may be easily achieved.

According to an embodiment of the present disclosure, a dehumidification module that separates moisture in the air is disposed in the first part, so that the separated water vapor falls in the direction of gravity, making it easy to collect water vapor and compactly constructing the piping connected to the vacuum pump.

According to an embodiment of the present disclosure, by placing the heat exchanger in the first part, the main flow of indoor air requiring dehumidification and the sub-flow for the heat exchanger may be easily generated in two directions using one fan.

According to an embodiment of the present disclosure, the first part is divided through a partition wall and a dehumidification module and a heat exchanger are disposed in the divided area, so that a main flow in which a relatively large amount of suction is performed and a sub flow in which a small amount of suction is performed may be easily generated and pressure loss may be prevented.

According to an embodiment of the present disclosure, a vacuum pump for suctioning water vapor separated from the dehumidification module is disposed in the second part, and the second part forms the lower space of the dehumidifier, so that the separated water vapor may be easily suctioned into the vacuum pump by the effect of gravity.

According to an embodiment of the present disclosure, the vacuum pump is disposed in the second part below the heat exchanger, so that high-temperature water vapor passing through the vacuum pump is quickly transferred to the heat exchanger, it is easy to block noise generated from the vacuum pump, and it may be effective in accessibility for maintenance.

According to an embodiment of the present disclosure, a drain tank storing water condensed in a heat exchanger is disposed in the second part, thereby facilitating the flow of condensed water in the direction of gravity.

According to an embodiment of the present disclosure, the water supply tank that supplies water to the dehumidification module is disposed in the second part, so that the upper space of the dehumidifier may be efficiently utilized and the user's accessibility to the water supply tank may be improved.

According to an embodiment of the present disclosure, the suction part through which air is suctioned, the dehumidification module, and the fan are disposed to face each other to shorten the air flow path, so the flow rate of air suctioned through the suction part increases, thereby improving the moisture separation performance of the dehumidification module.

According to an embodiment of the present disclosure, the suction part is provided with a suction grill having a plurality of air holes, and, in the plurality of air holes, since the size of the hole increases as the distance from the center of the suction grill increases, the flow of air flowing into the dehumidification module may become uniform. When the flow of air flowing into the dehumidification module becomes uniform, the contact area between the dehumidification member and the humid air is maximized, so moisture separation performance may be improved.

According to an embodiment of the present disclosure, a suction grill with a plurality of air holes is provided on the suction side of the dehumidification module, and, in the plurality of air holes, since the size of the hole increases as the distance from the center of the suction grill increases, the flow of air flowing into the dehumidification module may become uniform. When the flow of air flowing into the dehumidification module becomes uniform, the contact area between the dehumidification member and the humid air is maximized, so moisture separation performance may be improved.

## Claims

1. A dehumidifier comprising:
a main body including a suction part and a fan;
a dehumidification module including a dehumidification member made of polymer membrane fibers to separate moisture from the humid air suctioned from the suction part;
a vacuum pump configured to provide driving force to discharge moisture separated from the dehumidification module to an outside of the dehumidification module;
a heat exchanger fluidly connected to the vacuum pump and configured to condense the separated moisture; and
a drain tank configured to store water condensed in the heat exchanger,
wherein a first direction of humid air flowing into the dehumidification module and a second direction in which moisture separated within the dehumidification module flows are perpendicular to each other

2. The dehumidifier of claim 1,
wherein a plurality of dehumidification members is provided, and a third direction in which the plurality of dehumidification members is arranged is perpendicular to the first direction and the second direction, respectively.

3. The dehumidifier of claim 1, further comprising:
a suction grill coupled to the suction part and in which a plurality of air holes is formed,
wherein the suction grill, the dehumidification module, and the fan are disposed to face each other

4. The dehumidifier of claim 3,
wherein an imaginary line passing through a center of the suction grill passes through a center of the dehumidification module and a center of the fan.

5. The dehumidifier of claim 4,
wherein, in the plurality of air holes, the size of the air hole increases as the distance from the center of the suction grill increases.

6. The dehumidifier of claim 3,
wherein the dehumidification module includes a housing disposed to surround at least a portion of the dehumidification member, and
wherein the suction grill is formed to be larger than an area of the dehumidification member exposed by the housing.

7. The dehumidifier of claim 3,
wherein the plurality of air holes is formed in a shape corresponding to a shape of the suction grill.

8. The dehumidifier of claim 7,
wherein the suction grill is formed in a shape of a square plate whose length in a vertical direction is longer than that in left and right directions, and
wherein the plurality of air holes is formed to be longer in the vertical direction than in the left and right directions.

9. The dehumidifier of claim 2,
wherein the suction grill includes a plurality of circular grills having the same center and different diameters, and
wherein the plurality of air holes is formed between the plurality of circular grills.

10. The dehumidifier of claim 9,
wherein the plurality of air holes is formed in a trapezoidal shape by ribs connecting the plurality of circular grilles.

11. The dehumidifier of claim 1,
wherein the suction part includes:
a first suction part formed on a first surface of the main body and to which the suction grill is coupled; and
a second suction part formed on a second surface of the main body, and
wherein the fan includes a two-way suction fan that discharges air suctioned from the first suction part and the second suction part, respectively.

12. The dehumidifier of claim 11,
wherein the first suction part and the second suction part are disposed across from each other based on the main body.

13. The dehumidifier of claim 12,
wherein the dehumidification module is disposed between the first suction part and the fan, and
wherein the heat exchanger is disposed between the second suction part and the fan.

## Amended claims

### Amended claims in accordance with Rule 137(2) EPC.

1. A dehumidifier comprising:
a main body (100) including a suction part and a fan (150);
a dehumidification module (300) including a dehumidification member (320) made of polymer membrane fibers to separate moisture from the humid air suctioned from the suction part;
a vacuum pump (230) configured to provide driving force to discharge moisture separated from the dehumidification module (300) to an outside of the dehumidification module (300);
a heat exchanger (160) fluidly connected to the vacuum pump (230) and configured to condense the separated moisture; and
a drain tank (250) configured to store water condensed in the heat exchanger (160),
**characterized in that**:
the dehumidifier further comprises a suction grill (110) coupled to the suction part and in which a plurality of air holes (111) is formed;
the dehumidification module (300) is disposed between the suction grill (110) and the fan (150);
an imaginary line (L1) passing through a center of the suction grill (110) passes through a center of the dehumidification module (300) and a center of the fan (150); and
with respect to the plurality of air holes (111), the size of the air hole increases as the distance from the center of the suction grill (110) increases.

2. The dehumidifier of claim 1,
wherein the dehumidification module (300) includes a plurality of dehumidification members, and the plurality of dehumidification members are arranged in left and right directions .

3. The dehumidifier of claim 1,
wherein the dehumidification module includes a housing disposed to surround at least a portion of the dehumidification member, and
wherein the suction grill (110) is formed to be larger than an area of the dehumidification member exposed by the housing.

4. The dehumidifier of claim 1,
wherein the plurality of air holes (111) is formed in a shape corresponding to a shape of the suction grill (110).

5. The dehumidifier of claim 4,
wherein the suction grill (110) is formed in a shape of a square plate whose length in a vertical direction is longer than that in left and right directions, and
wherein the plurality of air holes is formed to be longer in the vertical direction than in the left and right directions.

6. The dehumidifier of claim 1,
wherein the suction grill (110) includes a plurality of circular grills having the same center and different diameters, and
wherein the plurality of air holes (111) is formed between the plurality of circular grills.

7. The dehumidifier of claim 6,
wherein the plurality of air holes (111) is formed in a trapezoidal shape by ribs connecting the plurality of circular grilles.

8. The dehumidifier of claim 1,
wherein the suction part includes:
a first suction part (110a) formed on a first surface of the main body and to which the suction grill (110) is coupled; and
a second suction part (115a) formed on a second surface of the main body, and
wherein the fan (150) includes a two-way suction fan that discharges air suctioned from the first suction part (110a) and the second suction part (115a), respectively.

9. The dehumidifier of claim 8,
wherein the first suction part (110a) and the second suction part (115a) are disposed across from each other based on the main body.

10. The dehumidifier of claim 9,
wherein the dehumidification module is disposed between the first suction part (110a) and the fan (150), and
wherein the heat exchanger is disposed between the second suction part (115a) and the fan (150).
